(19) Europäisches Patentamt
European Patent Office
Office européen des brevets

(11) **EP 2 147 566 B1**

(12) **EUROPEAN PATENT SPECIFICATION**

(45) Date of publication and mention of the grant of the patent:
**14.10.2015 Bulletin 2015/42**

(51) Int Cl.:
***G01S 5/12*** *(2006.01)*      ***H04W 64/00*** *(2009.01)*

(21) Application number: **08745071.4**

(86) International application number:
**PCT/US2008/059343**

(22) Date of filing: **04.04.2008**

(87) International publication number:
**WO 2008/130816 (30.10.2008 Gazette 2008/44)**

(54) **TECHNIQUES TO ENHANCE LOCATION ESTIMATION IN AN OFDMA BASED SYSTEM**

VERFAHREN ZUR VERBESSERTEN STANDORTSCHÄTZUNG IN EINEM OFDMA-BASIERTEN SYSTEM

TECHNIQUES POUR AMÉLIORER L'ESTIMATION D'EMPLACEMENT DANS UN SYSTÈME BASÉ SUR L'OFDMA

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.04.2007 US 736680**

(43) Date of publication of application:
**27.01.2010 Bulletin 2010/04**

(73) Proprietor: **Intel Corporation**
**Santa Clara, CA 95054 (US)**

(72) Inventors:
• **ETEMAD, Kamran**
**Potomac, MD 20854 (US)**
• **YIN, Hujun**
**San Jose, California 95131 (US)**

(74) Representative: **Clarke, Jeffrey David**
**HGF Limited**
**140 London Wall**
**London EC2Y 5DN (GB)**

(56) References cited:
| EP-A2- 1 465 372 | WO-A1-2004/021733 |
| GB-A- 2 353 910 | US-A- 5 701 328 |
| US-A- 6 111 538 | US-A1- 2006 050 625 |
| US-A1- 2006 125 693 | US-B1- 6 195 046 |
| US-B1- 6 249 252 | US-B1- 6 738 628 |

**Description**

BACKGROUND

Mobile client location estimation is an important feature in wireless networks. Accurate location estimation is required for E911 services to enable commercial mobile Voice /VoIP service. It is also needed to enable location based services such as localize searches and navigation in next generation mobile networks. Although satellite based Global Positioning System (GPS) provides fairly accurate location service, its coverage is far from ubiquitous, especially in dense urban and indoor environment. Therefore, it is necessary for the wireless network to provide ubiquitous location service when GPS coverage or device is not available. Thus, a strong need exists for techniques to enhance location estimation in wireless networks, such as in OFDMA based systems.

Document WO 2004/021733 discloses a method and apparatus to facilitate the locating and tracking of a wireless terminal for E-911 service, in which a terminal may be directed to transmit a beacon for certain events, such as in connection with 911 call.

SUMMARY

There is provided an apparatus as set out in claim 1, and a method as set out in claim 7.

BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

FIG. 1 illustrates received signals from multiple base stations (BSs) in time in an embodiment of the present invention;

FIG. 2 shows a differential time of arrival (ToA) technique of an embodiment of the invention;

FIG. 3 depicts a triangularization using Uplink and/or Downlink measurements an embodiment of the present invention;

FIG. 4 illustrates locating beacons and their allocation change over time according to one embodiment of the present invention;

FIG. 5 shows beamforming the locating beacons according to an embodiment of the present invention; and

FIG. 6 illustrates a system according to an embodiment of the present invention. It will be appreciated that for simplicity and clarity of illustration, elements illustrated in the figures have not necessarily been drawn to scale. For example, the dimensions of some of the elements are exaggerated relative to other elements for clarity. Further, where considered appropriate, reference numerals have been repeated among the figures to indicate corresponding or analogous elements.

DETAILED DESCRIPTION

In the following detailed description, numerous specific details are set forth in order to provide a thorough understanding of the invention. However, it will be understood by those skilled in the art that the preset invention may be practiced without these specific details. In other instances, well-known methods, procedures, components and circuits have not been described in detail so as not to obscure the present invention.

In the following detailed description, numerous specific details are set forth in order to provide a thorough understanding of the invention. However, it will be understood by those of ordinary skill in the art that the invention may be practiced without these specific details. In other instances, well-known methods, procedures, components, units and/or circuits have not been described in detail so as not to obscure the invention.

Embodiments of the invention may be used in a variety of applications. Some embodiments of the invention may be used in conjunction with various devices and systems, for example, a transmitter, a receiver, a transceiver, a transmitter-receiver, a wireless communication station, a wireless communication device, a wireless Access Point (AP), a modem, a wireless modem, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, a network, a wireless network, a Local Area Network (LAN), a Wireless LAN (WLAN), a Metropolitan Area Network (MAN), a Wireless MAN (WMAN), a Wide Area Network (WAN), a Wireless WAN (WWAN), devices and/or networks operating in accordance with existing IEEE 802.16e, 802.20, 3GPP Long Term Evolution (LTE) etc. and/or future versions and/or derivatives and/or Long Term Evolution (LTE) of the above standards, a Personal Area Network (PAN), a Wireless PAN (WPAN), units and/or devices which are part of the above WLAN and/or PAN and/or WPAN networks, one way and/or two-way radio communication systems, cellular radio-telephone communication systems, a cellular telephone, a wireless telephone, a Personal Communication Systems (PCS) device, a PDA device which incorporates a wireless communication device, a Multiple Input Multiple Output (MIMO) transceiver or device, a Single Input Multiple Output (SIMO) transceiver or device, a Multiple Input Single Output (MISO) transceiver or device, a Multi Receiver Chain (MRC) transceiver or device, a transceiver or device having "smart antenna" technology or multiple antenna technology, or the like. Some embodiments of the invention may be used in conjunction with one or more types of wireless communication signals and/or systems, for example, Radio Frequency (RF), Infra Red (IR), Frequency-Division Multiplexing (FDM), Orthogonal FDM (OFDM), Orthogonal Frequency-Division Multiple Access (OFDMA), Time-Division Multiplexing (TDM), Time-Division Multiple Access (TDMA), Extended TDMA (E-TDMA), Code-Division Multiple Access (CDMA), Multi-Carrier Modulation (MDM), Discrete Multi-Tone (DMT), Bluetooth (RTM), ZigBee (TM), or the like. Embodiments of the invention may be used in various other apparatuses, devices, systems and/or networks.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. For example, "a plurality of stations" may include two or more stations.

Although embodiments of the invention are not limited in this regard, the term "multicast/broadcast" as used herein may include, for example, multicast communication, broadcast communication, wireless multicast communication, wired multicast communication, wireless broadcast communication, wired broadcast communication, multicast communication over the Internet or over a global communication network, broadcast communication over the Internet or over a global communication network, multicast communication using TCP/IP, broadcast communication using TCP/IP, web-cast communication (e.g., using the World Wide Web), and/or other types of communication, e.g., non-unicast communication.

Embodiments of the present invention provide two types of location services: periodic location over a short or long session such as navigation; and occasional event based location triggered by applications such as, but not limited to, localize search or E911 call.

For periodic location it is more efficient to perform the measurement and calculation in the terminal, to avoid the extra overhead imposed on the airlink. For event based location, the measurement may be done at the terminal or by the network, both requiring similar overhead.

An embodiment of the present invention may use a triangularization concept involving estimation of distance from multiple base stations (BSs) close to a mobile station's (MS) location. The calculation of the location may be performed by the mobile station based on DL measurements. Alternatively the location may be determined in the networks based on direct UL measurements or the DL measurements reported by the MS. If the MS calculates the location, the network needs to provide the MS with the geo-location of the serving and neighboring base stations (BSs) included in the triangularization.

In the utilization of this method, key challenges in location determination include being able to reliably detect signals from 3-4 BS's across a cell area and identifying and using the best combination of measurements to give highest accuracy across the cell area.

Although not limited in this respect, most OFDMA systems and specifically Worldwide Interoperability for Microwave Access (WiMAX-) have provided very limited support for the above requirements. An embodiment of the present invention provides several enhancements in the airlink of such system, and is exemplified herein by use with WiMAX. However, it is understood that the present invention is not limited to WiMAX or any particular wireless network. These enhancements may include high Power Single/Multi Tone Location Beacons (LB) on Downlink or Uplink with focused power on one or a few tones providing higher penetration into neighboring BS coverage area. If DL Tones are measured by the MS, they may be transmitted by serving and neighboring base stations to be transmitted by serving and neighboring cells. Whereas, UL Tones may be measured by serving and selecting neighbor base stations (BSs).

In order to provide for more accurate location determination, a combined Time of Arrival (ToA), Received Signal Strength Indicator (RSSI) and Angle of Arrival (AoA) may be utilized. Further, multiple antennas may be utilized for both ToA and AoA calculations and beamforming on Location Beacons may be used.

ToA Estimation

With the appending of cyclic prefix (CP) in front of orthogonal frequency division multiplexing (OFDM) symbols, the time synchronization requirement of an OFDM receiver is greatly reduced. As long as the receiver is synchronized within the CP window, it should be able to correctly demodulate the OFDM symbol. Therefore, the traditional receiver has ToA ambiguity up to the whole CP duration. In WiMAX, the CP duration is approximately 10us, which translates to distance ambiguity up to 3000m - far exceeding the tolerable limit of location error. Therefore, it is necessary to acquire accurate ToA estimation at the preamble. The neighboring BSs will use different preamble sequences. The ToA of each BS can be estimated from their respective time correlations.

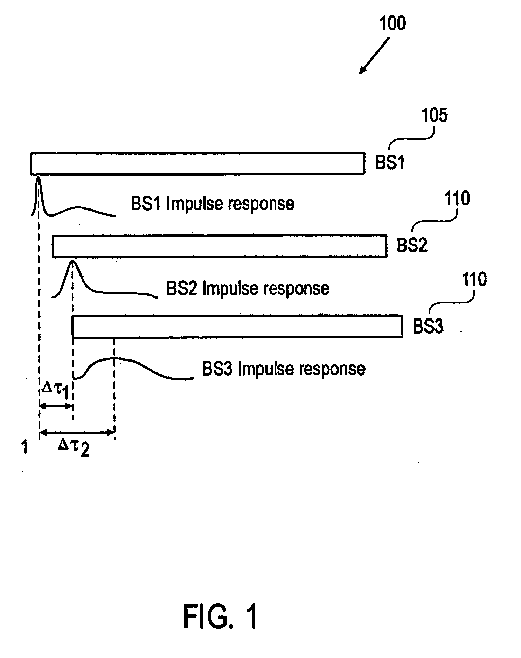

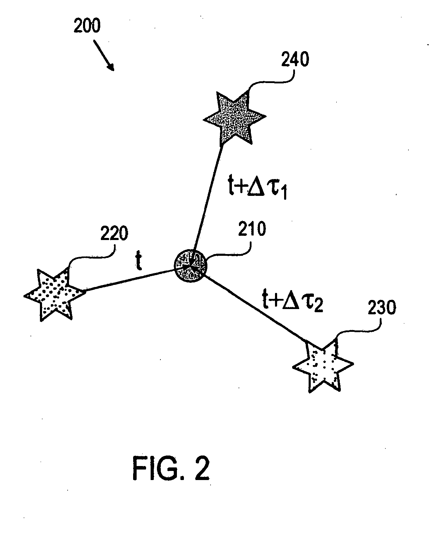

Looking now at 100 of FIG. 1, if the location of three BSs 105, 110 and 115 (BS3 in Fig 1 is labled as 110) are known as $(x1,y1)$ $(x2,y2)$ and $(x3,y3)$, the differential ToA between BS2 110 and BS1 105 is $\Delta t1$ and the differential TOA between BS3 115 and BS1 105 is $\Delta t2$. Further, FIG. 2 at 200 shows a differential time of arrival (ToA) technique of an embodiment of the invention including the triangularization at 210 from reference points 220, 230 and 240.

The client location (x,y) can be solved by:

$$\sqrt{(x-x_2)^2+(y-y_2)^2} - \sqrt{(x-x_1)^2+(y-y_1)^2} = c\Delta\tau_1$$
$$\sqrt{(x-x_3)^2+(y-y_3)^2} - \sqrt{(x-x_1)^2+(y-y_1)^2} = c\Delta\tau_2$$

**DL or UL Location Beacons**

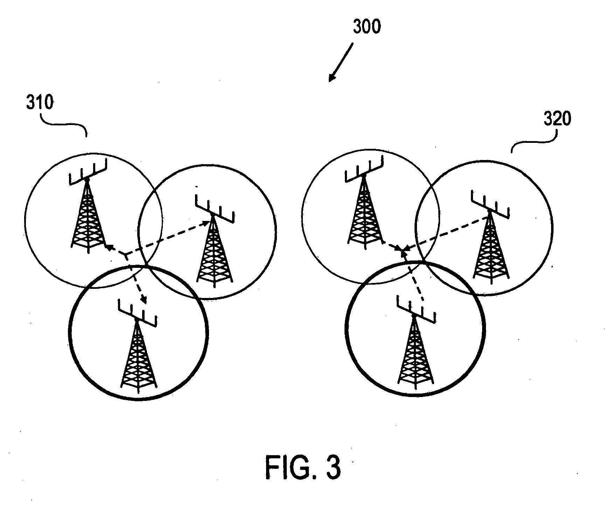

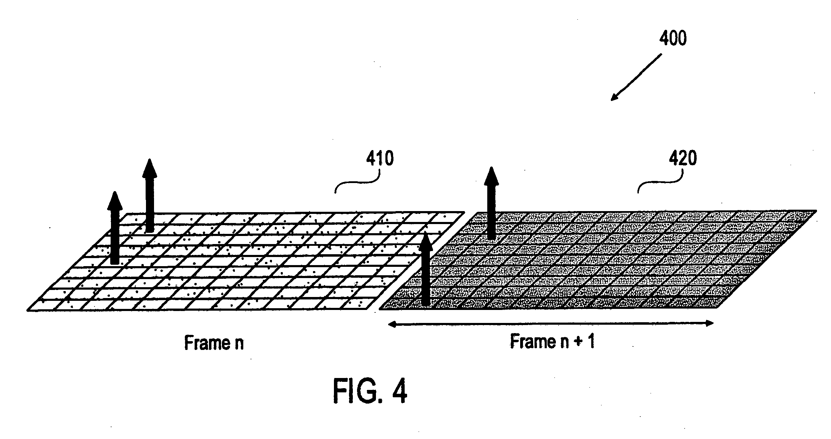

Looking now at FIG. 3 at 300 is depicted a triangularization using Uplink 310 and/or Downlink 320 measurements of an embodiment of the present invention. Further, FIG. 4 at 400 illustrates locating beacons and their allocation change over time from frame N 410 to frame N+1 420 according to one embodiment of the present invention. High Power Single/Multi Tone Location Beacons may be transmitted in the DL to enable downlink measurements needed to allow location determination. Alternatively the locating beacons may be transmitted in the uplink to allow uplink measurements by the multiple BS's, in which case the network may typically perform the location determination.

In the following, an embodiment of the present invention describes DL Locating Beacons, however similar concepts may be applied to UL Locating Beacons as well and the present invention is understood not to be limited in this respect.

The LB's may be transmitted with the following parameters/options

- Transmission Tones/Symbols:

    - Single or multiple transmission: Multiple transmissions may provide time and also frequency diversity if selected tones for consecutive transmissions are changed.
    - Location of tone/symbol: The locations of tones may be pre-specified/calculated based on other BS parameters or they may be specified through configuration messages.

        - Same Tone May be used for all BS but using different spreading sequences.
        - Different Tones may be used for different BS using the same sequence that is optimal for detection and timing estimation.

    - The system can support both Single Frequency Network (SFN) as well as Non-SFN, especially if multiple transmissions are used.

- Two Transmission Modes

    - Periodic Broadcast transmission for periodic navigation type services.
    - Dedicated/Unicast, higher power mode, for E911 service.

Define a "Location Active Set" for the mobiles. All BS's in the location active set will send the tones. The tones may be transmitted:

- At the same time and on the same tone but using different spreading codes.
- At different times or tones determined based on BS's permutation sequence.
- Periodically or triggered on Location request

**Measurement options:**

- Single Antenna Measurement, e.g. TOA/DTOA/RSSI or combination
- Multi-antenna Measurements, including AoA and TOA/DTOA/RSSI

**RSSI Measurement**

With a signal tone transmission, the signal may be transmitted at much higher power (more than 10dB) than the regular transmission. Therefore, the single tone signal may penetrate deep into the coverage area of other BSs, improving the chance of estimating RSSIs from multiple BSs.

The RSSI, however, is not an accurate indication of location. Rather, it is a combined effect of path loss and shadow fading. Assume the pass loss exponent and lognormal shadow fading s. The RSSI (L) and MS to BS distance (d) have the following relationship:

$$p(L = L_0) = \frac{1}{\sqrt{2\pi\sigma^2}}\exp\left(\frac{(L_0 - 10\alpha\lg(d))^2}{2\sigma^2}\right)$$

If RSSI L1, L2, ... LN is measured for BS1, BS2, ... BSN with location (x1,y1), (x2,y2), ... (xN, yN), the MS location estimation (x, y) is to minimize:

$$\arg\min_{(x,y)}\sum_{i=1}^{N}\left(L_i - 10\alpha\lg(\sqrt{(x - x_i)^2 + (y - y_i)^2})\right)^2$$

**AoA Estimation with multiple antennas**

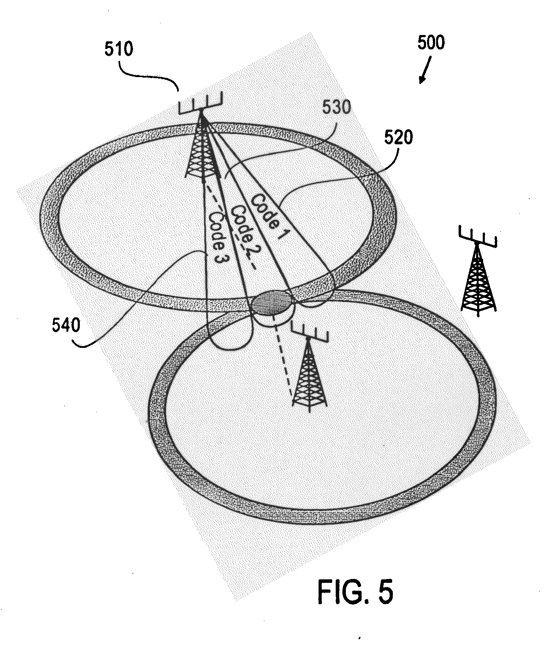

In an embodiment of the present invention, multiple antenna's may be utilized when available at the BS's and mobiles to improve location accuracy. AoA estimation may be easier with Locating Beacons and AoA will increase location accuracy at inner locations close to the BS where triangularization may be hard to achieve. Looking at FIG. 5 at 500 is an illustration showing beamforming 510 the locating beacons according to an embodiment of the present invention.

Since the beacon signal is high power and narrow band, it can be beam-formed very effectively. One BS can send several disjoint beams that effectively cover the whole sector area. Each BS will transmit LB's on narrow beams sweepings across multiple angles, while using different spreading codes, in indicating an angular index for each transmission, e.g. code 1 520, code 2 530 and code 3 540. The AoA may thus be estimated once a LB's with strongest signal is detected and the index for its spreading code is identified. Alternatively the BS may use different tones in each step of beam sweeping so that the location of LB on the tone space will identify the beam angle.

On narrow band, there will be a single AoA. Assume there are N antennas persector and multiple beams are transmitted with different beamforming vector W = [$w_1$, $w_2$,$\Lambda$ $w_N$]. Further assume antenna spacing d and wave length $\square$, the received signal at angle $\theta$ is:

$$r_i = \left[1, \cos\frac{2\pi d\cos\theta}{\lambda}, \Lambda, \cos\frac{2\pi(N-1)d\cos\theta}{\lambda}\right]\begin{bmatrix} w_{i1} \\ w_{i2} \\ M \\ w_{iN} \end{bmatrix} + n_i$$

It is possible that multiple beams can be detected, the AoA estimation is therefore:

$$\arg\min_{\theta}\left\{\sum_{i=1}^{N}\left(r_i - \left[1, \cos\frac{2\pi d\cos\theta}{\lambda}, \Lambda, \cos\frac{2\pi(N-1)d\cos\theta}{\lambda}\right]w_i\right)^2\right\}$$

So while the existing preamble based ToA measurement may be used as a baseline location technique when three or more preambles are reliably detectable, the location beacons with RSSI and/or AoA measurements will be used to improve the accuracy and also extend the location feasibility throughout the coverage area.

Although not limited in this respect, an embodiment of the present invention may be applied to the design of next generation WiMAX systems, i.e. WiMAX II. The enhanced location estimation for WiMAX 2 provides ubiquitous and accurate location estimation for MSs across the WiMAX 2 coverage area, which overcomes the GPS shortcomings in city and indoor environment. The enhancements also significantly improve the accuracy and coverage of location estimation over what is available in WiMAX.

Some embodiments of the invention may be implemented by software, by hardware, or by any combination of software and/or hardware as may be suitable for specific applications or in accordance with specific design requirements. Embodiments of the invention may include units and/or sub-units, which may be separate of each other or combined together, in whole or in part, and may be implemented using specific, multipurpose or general processors or controllers, or devices as are known in the art. Some embodiments of the invention may include buffers, registers, stacks, storage units and/or memory units, for temporary or long-term storage of data or in order to facilitate the operation of a specific embodiment.

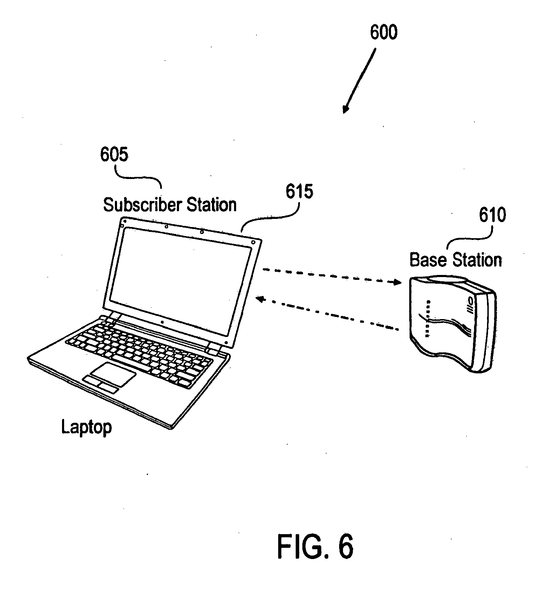

Some embodiments of the invention may be implemented, for example, using a machine-readable medium or article which may store an instruction or a set of instructions that, if executed by a machine, for example, by system 600 of FIG. 6, by mobile station 605 of FIG. 6 which may include a processor (not shown) and single or multiple antennas 615, or by other suitable machines, cause the machine to perform a method and/or operations in accordance with embodiments of the invention. Mobile station 605 may be in communication with base station 610. Such machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Re-Writeable (CD-RW), optical disk, magnetic media, various types of Digital Versatile Disks (DVDs), a tape, a cassette, or the like. The instructions may include any suitable type of code, for example, source code, compiled code, interpreted code, executable code, static code, dynamic code, or the like, and may be implemented using any suitable high-level, low-level, object-oriented, visual, compiled and/or interpreted programming language, e.g., C, C++, Java, BASIC, Pascal, Fortran, Cobol, assembly language, machine code, or the like.

An embodiment of the present invention provides a machine-accessible medium that provides instructions, which when accessed, cause a machine to perform operations comprising determining the position of a mobile station in a wireless network by transmitting a single or multi tone location beacon by said base station on a downlink or mobile station on an uplink with focused power on at least one tone.

Further, the machine-accessible medium may further comprise said instructions causing said machine to perform operations further comprising the instructions causing the machine to perform operations further comprising using Time of Arrival (ToA) and/or Received Signal Strength Indications (RSSI) and/or Angle of Arrival (AoA) information to enable more accurate position determination.

## Claims

1. An apparatus, comprising:

   a mobile station, MS, (605) operable to enable position determination using a single or multi tone location beacon, LB, in a downlink Orthogonal Frequency-Division Multiple Access, OFDMA, frame transmitted by a base station with multiple antennas on a plurality of narrow beams sweeping multiple angles with focused power on at least one tone, wherein each narrow beam uses a different spreading code (520, 530, 540) indicating an angular index for each narrow beam transmission;
   wherein determining the position of a mobile station (605) estimates an angle of arrival, AoA, represented by

$$\arg\min_{\theta}\left\{\sum_{i=1}^{N}\left(r_i - \left[1, \cos\frac{2\pi d \cos\theta}{\lambda}, \cdots, \cos\frac{2\pi(N-1)d\cos\theta}{\lambda}\right]w_i\right)^2\right\}$$

wherein each of the plurality of narrow beams are represented by a different beamforming vector W = [$w_1$, $w_2$,···$w_N$] for N antennas per sector, d is the antenna spacing, $\lambda$ is the wavelength, and the received signal at angle $\theta$ is

$$r_i = \left[1, \cos\frac{2\pi d \cos\theta}{\lambda}, \cdots, \cos\frac{2\pi(N-1)d\cos\theta}{\lambda}\right]\begin{bmatrix} w_{i1} \\ w_{i2} \\ \vdots \\ w_{iN} \end{bmatrix} + n_i .$$

2. The apparatus of claim 1, further comprising said mobile station (605) using Time of Arrival, ToA, and/or Received Signal Strength Indications, RSSI, to enable more accurate position determination.

3. The apparatus of claim 1, wherein said at least one tone is a multi tone.

4. The apparatus of claim 1, wherein said single or multi tone location beacon is received on a downlink OFDMA frame to enable downlink measurements for an angle of arrival, AoA, estimation used in location determination.

5. The apparatus of claim 1, wherein said apparatus transmits the location beacon using periodic broadcast transmission for periodic navigation type services.

6. The apparatus of claim 1, wherein said apparatus transmits the location beacon using dedicated/unicast, higher power mode.

7. A method, comprising:

determining the position of a mobile station (605) in a wireless network using Angle of Arrival, AoA, information by transmitting a single or multi tone location beacon, LB, in a downlink Orthogonal Frequency-Division Multiple Access, OFDMA, frame by a base station with multiple antennas on a plurality of narrow beams sweeping multiple angles with focused power on at least one tone, wherein each narrow beam uses ia different spreading code (520, 530, 540) indicating an angular index for each narrow beam transmission;
wherein determining the position of a mobile station (605) estimates an angle of arrival, AoA, represented by

$$\arg\min_{\theta}\left\{\sum_{i=1}^{N}\left(r_i - \left[1, \cos\frac{2\pi d \cos\theta}{\lambda}, \cdots, \cos\frac{2\pi(N-1)d\cos\theta}{\lambda}\right]w_i\right)^2\right\}$$

wherein each of the plurality of narrow beams are represented by a different beamforming vector W = [$w_1$, $w_2$,···$w_N$] for N antennas per sector, d is the antenna spacing, $\lambda$ is the wavelength, and the received signal at angle $\theta$ is

$$r_i = \left[1, \cos\frac{2\pi d\cos\theta}{\lambda}, \cdots, \cos\frac{2\pi(N-1)d\cos\theta}{\lambda}\right]\begin{bmatrix} w_{i1} \\ w_{i2} \\ \vdots \\ w_{iN} \end{bmatrix} + n_i .$$

8. The method of claim 7, further comprising using Time of Arrival, ToA, and/or Received Signal Strength Indications, RSSI, to enable more accurate position determination.

9. The method of claim 7, further comprising receiving said single or multi tone location beacon at the mobile station (605) on a downlink OFDMA frame to enable downlink measurements for an angle of arrival, AoA, estimation used in location determination.

10. The method of claim 7, further comprising transmitting the location beacon using periodic broadcast transmissions for periodic navigation type services, or a dedicated/unicast, higher power mode.

11. A machine-accessible medium that provides instructions, which when accessed, cause a machine to perform operations comprising all of method steps of claims 7 to 10.

**Patentansprüche**

1. Vorrichtung, die aufweist:

eine Mobilstation MS (605), die betreibbar ist, um Positionsbestimmung mittels eines Ein- oder Mehrfachton-Ortsbakensignals LB in einem Orthogonal-Frequency-Division-Multiple-Access-Downlinkrahmen (OFDMA-Downlinkrahmen) zu ermöglichen, welches durch eine Basisstation mit mehreren Antennen auf einer Vielzahl von schmalen Strahlen, die mit auf mindestens einen Ton fokussierter Leistung mehrere Winkel überstreichen, gesendet wird, wobei jeder schmale Strahl einen unterschiedlichen Spreizungscode (520, 530, 540) verwendet, der einen Winkelindex für jede Schmalstrahlübertragung angibt;
wobei das Bestimmen der Position einer Mobilstation (605) einen Ankunftswinkel AoA schätzt, dargestellt durch:

$$\arg\min_{\theta}\left\{\sum_{i=1}^{N}\left(r_i - \left[1, \cos\frac{2\pi d\cos\theta}{\lambda}, ..., \cos\frac{2\pi(N-1)d\cos\theta}{\lambda}\right]w_i\right)^2\right\}$$

wobei jeder aus der Vielzahl von schmalen Strahlen durch einen unterschiedlichen Strahlformvektor W= [$w_1$, $w_2$, $\cdots$, $w_N$] für N Antennen pro Sektor dargestellt ist, d der Antennenabstand ist, λ die Wellenlänge ist und das bei Winkel θ empfangene Signal

$$r_i = \left[1, \cos\frac{2\pi d\cos\theta}{\lambda}, ..., \cos\frac{2\pi(N-1)d\cos\theta}{\lambda}\right]\begin{bmatrix} w_{i1} \\ w_{i2} \\ \cdot \\ \cdot \\ \cdot \\ w_{iN} \end{bmatrix} + n_i$$

ist.

2. Vorrichtung nach Anspruch 1, ferner aufweisend die Mobilstation (605), die Ankunftszeit ToA und/oder Empfangssignalstärkeanzeige RSSI verwendet, um eine genauere Positionsbestimmung zu ermöglichen.

3. Vorrichtung nach Anspruch 1, wobei der mindestens eine Ton ein Mehrfachton ist.

4. Vorrichtung nach Anspruch 1, wobei das Ein- oder Mehrfachton-Ortsbakensignal auf einem OFDMA-Downlinkrahmen empfangen wird, um Downlinkmessungen für eine Schätzung des Ankunftswinkels AoA, die bei der Standortbestimmung verwendet wird, zu ermöglichen.

5. Vorrichtung nach Anspruch 1, wobei die Vorrichtung das Ortsbakensignal mittels periodischer Broadcast-Übertragung für periodische Dienste vom Navigationstyp sendet.

6. Vorrichtung nach Anspruch 1, wobei die Vorrichtung das Ortsbakensignal mittels Dedicated/Unicast Higher Power Mode sendet.

7. Verfahren, umfassend:

Bestimmen der Position einer Mobilstation (605) in einem drahtlosen Netzwerk mittels Ankunftswinkel-(AoA)-Informationen durch Senden eines Ein- oder Mehrfachton-Ortsbakensignals LB in einem Orthogonal-Frequency-Division-Multiple-Access-Downlinkrahmen (OFDMA-Downlinkrahmen) durch eine Basisstation mit mehreren Antennen auf einer Vielzahl von schmalen Strahlen, die mit auf mindestens einen Ton fokussierter Leistung mehrere Winkel überstreichen, wobei jeder schmale Strahl einen unterschiedlichen Spreizungscode (520, 530, 540) verwendet, der einen Winkelindex für jede Schmalstrahlübertragung angibt;
wobei das Bestimmen der Position einer Mobilstation (605) einen Ankunftswinkel AoA schätzt, dargestellt durch:

$$\arg\min_{\theta}\left\{\sum_{i=1}^{N}\left(r_i-\left[1,\cos\frac{2\pi d\cos\theta}{\lambda},...,\cos\frac{2\pi(N-1)d\cos\theta}{\lambda}\right]w_i\right)^2\right\}$$

wobei jeder aus der Vielzahl von schmalen Strahlen durch einen unterschiedlichen Strahlformvektor W=[$w_1$, $w_2$, $\cdots$, $w_N$] für N Antennen pro Sektor dargestellt ist, d der Antennenabstand ist, $\lambda$ die Wellenlänge ist und das bei Winkel $\theta$ empfangene Signal

$$r_i=\left[1,\cos\frac{2\pi d\cos\theta}{\lambda},...,\cos\frac{2\pi(N-1)d\cos\theta}{\lambda}\right]\begin{bmatrix}w_{i1}\\w_{i2}\\.\\.\\.\\w_{iN}\end{bmatrix}+n_i$$

ist.

8. Verfahren nach Anspruch 7, ferner umfassend das Verwenden von Ankunftszeit ToA und/oder Empfangssignalstärkeanzeige RSSI, um eine genauere Positionsbestimmung zu ermöglichen.

9. Verfahren nach Anspruch 7, ferner umfassend das Empfangen des Ein- oder Mehrfachton-Ortsbakensignals an der Mobilstation (605) auf einem OFDMA-Downlinkrahmen, um Downlinkmessungen für eine Schätzung des Ankunftswinkels AoA, die bei der Standortbestimmung verwendet wird, zu ermöglichen.

10. Verfahren nach Anspruch 7, ferner umfassend das Senden des Ortsbakensignals mittels periodischer Broadcast-Übertragungen für periodische Dienste vom Navigationstyp oder mittels eines Dedicated/Unicast Higher Power Mode.

11. Maschinenzugreifbares Medium, welches Anweisungen bereitstellt, die, wenn darauf zugegriffen wird, bewirken, dass eine Maschine Vorgänge ausführt, die alle Verfahrensschritte der Ansprüche 7 bis 10 umfassen.

**Revendications**

1. Appareil, comprenant :

   une station mobile, MS, (605) permettant une détermination de position en utilisant une balise d'emplacement, LB, simple ou multi-tonalité dans une trame d'accès multiple par répartition orthogonale de la fréquence, OFDMA, de liaison descendante transmise par une station de base avec plusieurs antennes sur une pluralité de faisceaux étroits balayant plusieurs angles avec une puissance concentrée sur au moins une tonalité, chaque faisceau étroit utilisant un code d'étalement différent (520, 530, 540) indiquant un index angulaire pour chaque transmission sur des faisceaux étroits ;
   l'étape consistant à déterminer la position d'une station mobile (605) estimant un angle d'arrivée, AoA, représenté par

   $$\arg\min_{\theta}\left\{\sum_{i=1}^{N}\left(r_i-\left[1,\cos\frac{2\pi d\cos\theta}{\lambda},\cdots,\cos\frac{2\pi(N-1)d\cos\theta}{\lambda}\right]w_i\right)^2\right\}$$

   chacun de la pluralité de faisceaux étroits étant représenté par un vecteur de mise en forme de faisceau différent $W = [w_1, w_2, ..., w_N]$ pour N antennes par secteur, d étant l'espacement d'antenne, $\lambda$ étant la longueur d'onde, et le signal reçu à l'angle $\theta$ étant

   $$r_i=\left[1,\cos\frac{2\pi d\cos\theta}{\lambda},\cdots,\cos\frac{2\pi(N-1)d\cos\theta}{\lambda}\right]\begin{bmatrix}w_{i1}\\w_{i2}\\\vdots\\w_{iN}\end{bmatrix}+n_i.$$

2. Appareil selon la revendication 1, comprenant en outre :
   utiliser, par ladite station mobile (605), un temps d'arrivée, ToA, et/ou des indications d'intensité de signal reçu, RSSI, pour permettre une détermination de position plus précise.

3. Appareil selon la revendication 1, dans lequel ladite tonalité est une multi-tonalité.

4. Appareil selon la revendication 1, dans lequel ladite balise d'emplacement simple tonalité ou multitonalité est reçue sur une trame OFDMA de liaison descendante pour permettre des mesures de liaison descendante pour une estimation d'angle d'arrivée, AoA, utilisée dans une détermination d'emplacement.

5. Appareil selon la revendication 1, dans lequel ledit appareil transmet la balise d'emplacement en utilisant une transmission de diffusion périodique pour des services de type de navigation périodiques.

6. Appareil selon la revendication 1, dans lequel ledit appareil transmet la balise d'emplacement en utilisant un mode de puissance supérieur de diffusion individuelle dédiée.

**7.** Procédé, comprenant les étapes suivantes :

déterminer la position d'une station mobile (605) dans un réseau sans fil en utilisant des informations d'angle d'arrivée, AoA, en transmettant une balise d'emplacement, LB, simple ou multi-tonalité dans une trame d'accès multiple par répartition orthogonale de la fréquence, OFDMA, de liaison descendante transmise par une station de base avec plusieurs antennes sur une pluralité de faisceaux étroits balayant plusieurs angles avec une puissance concentrée sur au moins une tonalité, chaque faisceau étroit utilisant un code d'étalement différent (520, 530, 540) indiquant un index angulaire pour chaque transmission sur des faisceaux étroits ;
l'étape consistant à déterminer la position d'une station mobile (605) estimant un angle d'arrivée, AoA, représenté par

$$\arg\min_{\theta} \left\{ \sum_{i=1}^{N} \left( r_i - \left[ 1, \cos\frac{2\pi d\cos\theta}{\lambda}, \cdots, \cos\frac{2\pi(N-1)d\cos\theta}{\lambda} \right] w_i \right)^2 \right\}$$

chacun de la pluralité de faisceaux étroits étant représenté par un vecteur de mise en forme de faisceau différent W = [w$_1$, w$_2$, ..., w$_N$] pour N antennes par secteur, d étant l'espacement d'antenne, $\lambda$ étant la longueur d'onde, et le signal reçu à l'angle $\theta$ étant

$$r_i = \left[ 1, \cos\frac{2\pi d\cos\theta}{\lambda}, \cdots, \cos\frac{2\pi(N-1)d\cos\theta}{\lambda} \right] \begin{bmatrix} w_{i1} \\ w_{i2} \\ \vdots \\ w_{iN} \end{bmatrix} + n_i .$$

**8.** Procédé selon la revendication 7, comprenant en outre :

utiliser un temps d'arrivée, ToA, et/ou des indications d'intensité de signal reçu, RSSI, pour permettre une détermination de position plus précise.

**9.** Procédé selon la revendication 7, comprenant en outre :

recevoir dans ladite balise d'emplacement simple tonalité ou multitonalité, au niveau de la station mobile (605), sur une trame OFDMA de liaison descendante pour permettre des mesures de liaison descendante pour une estimation d'angle d'arrivée, AoA, utilisée dans une détermination d'emplacement.

**10.** Procédé selon la revendication 7, comprenant en outre :

transmettre la balise d'emplacement en utilisant des transmissions de diffusion périodique pour des services de type de navigation périodiques, ou un mode de puissance supérieur de diffusion individuelle dédiée.

**11.** Support accessible par machine qui fournit des instructions, qui lorsqu'elles sont accédées, amènent une machine à exécuter des opérations comprenant toutes les revendications 7 à 10 du procédé.

**FIG. 1**

FIG. 2

FIG. 3

FIG. 4

FIG. 5

600

605

Subscriber Station

615

610

Base Station

Laptop

FIG. 6

**EP 2 147 566 B1**

**Patent documents cited in the description**

- WO 2004021733 A